# EUROPEAN PATENT APPLICATION

(11) **EP 4 458 757 A1**
(43) Date of publication of application: **06.11.2024**
(21) Application number: 22915514.8
(22) Date of filing: 28.10.2022
(51) Int. Cl.: B67D 1/12, G05D 16/06, G05D 16/20

(54) **CARBON DIOXIDE GAS SUPPLY DEVICE**

(30) Priority: 27.12.2021 JP 2021213027
(71) Applicant: Asahi Group Holdings, Ltd., Tokyo 130-8602 (JP); Asahi Breweries, Ltd., Tokyo 130-8602 (JP)
(72) Inventor: YAMASHITA, Naoyuki, Moriya-shi, Ibaraki 302-0106 (JP); IMAI, Hirofumi, Asigarakami-gun, Kanagawa 258-0019 (JP); SHIRAISHI, Kazuya, Asigarakami-gun, Kanagawa 258-0019 (JP); UCHIDA, Hisashi, Asigarakami-gun, Kanagawa 258-0019 (JP)
(74) Representative: Pitchford, James Edward
(86) International application number: PCT/JP2022/040434
(87) International publication number: WO 2023/127281

(57) **Abstract**

A carbon dioxide gas supply apparatus 100 includes a pressure adjuster 10 configured to adjust a pressure of a carbon dioxide gas supplied from a carbon dioxide gas supply source 3 to a primary-side port P1 and send the carbon dioxide gas from a secondary-side port P2; a relief valve 20 connected to a first channel PH1 configured to connect the secondary-side port P2 and a beverage barrel 1; and a controller 30 configured to control the pressure adjuster 10 and the relief valve 20. The controller 30 controls the relief valve 20 such that a pressure in the first channel PH1 is reduced in accordance with an output of a temperature sensor 81 configured to detect a temperature of a beverage sent from the beverage barrel 1 to a beverage server 2.

## Description

### TECHNICAL FIELD

The present invention relates to a carbon dioxide gas supply apparatus.

### BACKGROUND ART

PTL 1 discloses a mechanical pressure adjuster that supplies a carbon dioxide gas to a beer barrel. In this pressure adjuster, the temperature of beer that passes from a beer barrel through a beer passage via a dispenser is sensed by a thermo-wax pellet, and a plunger is expanded/contracted, thereby opening/closing a valve and thus automatically adjusting the pressure of the carbon dioxide gas in accordance with the beer temperature. In the mechanical pressure adjuster, there is room for improvement concerning a delay of follow-up to a temperature change. PTL 2 discloses an electric control type carbon dioxide gas adjuster configured to control a pressurizing valve and a pressure reducing valve based on the output of a temperature sensor that measures the temperature of a sparkling beverage.

However, in the electric carbon dioxide gas adjuster as described in PTL 2, when lowering the pressure in the beer barrel, a carbon dioxide gas containing a beer mist (beverage component) is discharged from the beer barrel via the pressure reducing valve of the carbon dioxide gas adjuster. Due to such a beer mist, movable portions of the pressure reducing valve may stick.

### CITATION LIST

### PATENT LITERATURE

PTL 1: Japanese Patent Laid-Open No. 2006-143265
PTL 2: Japanese Patent Laid-Open No. 2009-280223

### SUMMARY OF INVENTION

### TECHNICAL PROBLEM

The present invention has as its object to provide a carbon dioxide gas supply apparatus having a configuration advantageous in preventing a pressure adjuster from sticking due to a beverage component.

### SOLUTION TO PROBLEM

One aspect of the present invention is directed to a carbon dioxide gas supply apparatus, and the carbon dioxide gas supply apparatus comprises a pressure adjuster including a primary-side port and a secondary-side port and configured to adjust a pressure of a carbon dioxide gas supplied from a carbon dioxide gas supply source to the primary-side port and send the carbon dioxide gas from the secondary-side port; a relief valve connected to a first channel configured to connect the secondary-side port and a beverage barrel; and a controller configured to control the pressure adjuster and the relief valve, wherein the controller controls the relief valve such that a pressure in the first channel is reduced in accordance with an output of a temperature sensor configured to detect a temperature of a beverage sent from the beverage barrel to a beverage server.

### ADVANTAGEOUS EFFECTS OF INVENTION

According to the present invention, there is provided a carbon dioxide gas supply apparatus having a configuration advantageous in preventing a pressure adjuster from sticking due to a beverage component.

### BRIEF DESCRIPTION OF DRAWINGS

Fig. 1 is a view schematically showing the configuration of a carbon dioxide gas supply apparatus according to the embodiment;
Fig. 2 is an enlarged view of a relief valve in an example shown in Fig. 1;
Fig. 3 is a view schematically showing the operation of the carbon dioxide gas supply apparatus according to the embodiment;
Fig. 4 is an enlarged view of a portion A in Fig. 3; and
Fig. 5 is an enlarged view of a portion B in Fig. 3.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

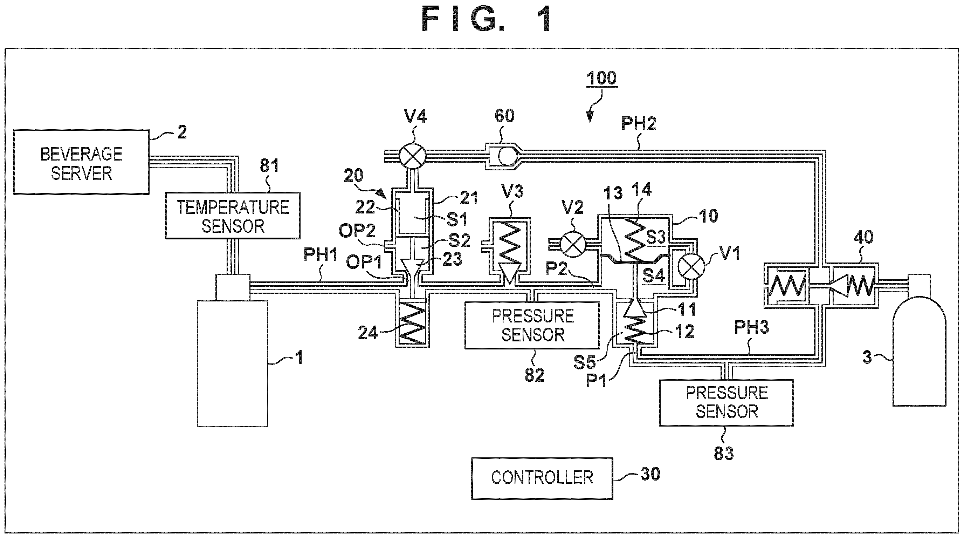

Fig. 1 schematically shows the configuration of a carbon dioxide gas supply apparatus 100 according to the embodiment. The carbon dioxide gas supply apparatus 100 is configured to adjust a carbon dioxide gas supplied from a carbon dioxide gas supply source (for example, a carbon dioxide gas cylinder) 3 to a target pressure and supply it to a beverage barrel 1. The carbon dioxide gas supply apparatus 100 can also be understood as a beverage pouring system. The carbon dioxide gas supplied to the beverage barrel 1 pushes down the liquid surface of a sparkling beverage in the beverage barrel 1 by its pressure, and the sparkling beverage in the beverage barrel 1 is thus pushed out from the beverage barrel 1 and supplied to a beverage server 2. The sparkling beverage can be, for example, beer, low-malt beer, a beer-like beverage, sour, highball, or the like.

The carbon dioxide gas supply apparatus 100 includes a pressure adjuster 10, a relief valve 20, and a controller 30. The pressure adjuster 10 can include a primary-side port P1 and a secondary-side port P2. The pressure adjuster 10 can be configured to adjust the pressure of the carbon dioxide gas supplied from the carbon dioxide gas supply source 3 to the primary-side port P1 and send it from the secondary-side port P2. The secondary-side port P2 of the pressure adjuster 10 is connected to the beverage barrel 1 via a first channel PH1. The relief valve 20 can be connected to the first channel PH1.

The controller 30 can be configured to control the pressure adjuster 10 and the relief valve 20. Based on the output of a temperature sensor 81 that detects the temperature of the sparkling beverage sent from the beverage barrel 1 to the beverage server 2, the controller 30 can control the relief valve 20 such that the pressure in the first channel PH1 is reduced (or the first channel PH1 is temporarily opened to the atmosphere). Control of the relief valve 20 by the controller 30 may be performed by the controller 30 supplying an electrical signal to the relief valve 20, or may be performed indirectly by the controller 30 controlling another constituent element (for example, a three-way valve V4), as will be described later. Such other constituent element may be regarded as a constituent element of the relief valve 20.

The temperature sensor 81 can be arranged in or connected to a channel that connects the beverage barrel 1 and the beverage server 2. The temperature sensor 81 may be understood as a constituent element of the carbon dioxide gas supply apparatus 100 or, or may be understood not as a constituent element of the carbon dioxide gas supply apparatus 100. The temperature sensor 81 may be provided in the beverage server 2. Alternatively, the temperature sensor 81 may be attached to the beverage barrel 1.

The carbon dioxide gas supply apparatus 100 can further include a second channel PH2 that supplies the carbon dioxide gas supplied from the carbon dioxide gas supply source 3 to the relief valve 20 to supply, to the relief valve 20, a force for maintaining the relief valve 20 in a closed state. The carbon dioxide gas supply apparatus 100 can further include a regulator 40 that reduces the pressure of the carbon dioxide gas supplied from the carbon dioxide gas supply source 3 to a predetermined pressure. The carbon dioxide gas supply apparatus 100 can further include a third channel PH3 that supplies, to the pressure adjuster 10, the carbon dioxide gas whose pressure is reduced to the predetermined pressure by the regulator 40. The second channel PH2 can be arranged to supply, to the relief valve 20, the carbon dioxide gas whose pressure is reduced to the predetermined pressure by the regulator 40.

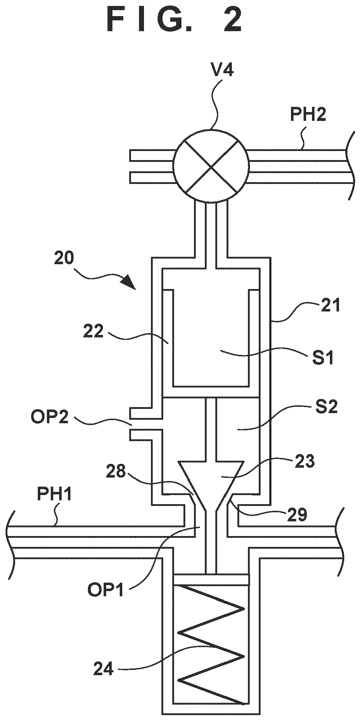

The configuration of the relief valve 20 is not limited to a specific configuration. Fig. 2 is an enlarged view of the relief valve 20 in the example shown in Fig. 1. In an example, the relief valve 20 can include a cylinder 21, a piston 22, a valve body 23, and a spring 24. The cylinder 21 can include, for example, a first opening OP1 provided with a seat 29, and a second opening OP2 communicating with the atmosphere. The piston 22 can separate the internal space of the cylinder 21 to a first space S1 and a second space S2. The valve body 23 can be arranged in the second space S2 and supported by the piston 22 to face the seat 29. The spring 24 can be arranged to press the valve body 23 to form a gap 28 between the seat 29 and the valve body 23.

The carbon dioxide gas supplied to the first space S1 via the second channel PH2 is introduced into the first space S1 and can give a force in a direction of pressing the valve body 23 against the seat 29 to the piston 22. The first opening OP1 communicates with the first channel PH1. The second opening OP2 makes the second space S2 communicate with the atmosphere.

The carbon dioxide gas supply apparatus 100 can further include the three-way valve V4 arranged in the second channel PH2. The three-way valve V4 can be controlled by the controller 30 to a first state in which the second channel PH2 and the first space S 1 of the relief valve 20 are connected or a second state in which the first space S1 of the relief valve 20 communicates with the atmosphere. The carbon dioxide gas supply apparatus 100 can further include a check valve 60 arranged in the second channel PH2 to supply the carbon dioxide gas from the regulator 40 to the three-way valve V4. The check valve 60 can function to prevent the pressure of the carbon dioxide gas to be supplied to the three-way valve V4 or the first space S1 of the relief valve 20 from lowering when the pressure of the carbon dioxide gas supplied from the carbon dioxide gas supply source 3 lowers due to the decrease of the amount of the carbon dioxide gas in the carbon dioxide gas supply source 3.

The carbon dioxide gas supply apparatus 100 can further include a safety valve V3 connected to a position between the pressure adjuster 10 and the connecting portion of the relief valve 20 in the first channel PH1. The safety valve V3 functions to prevent the pressure in the first channel PH1 from being a predetermined pressure or more.

The configuration of the pressure adjuster 10 is not limited to a specific configuration. In an example, the pressure adjuster 10 can include a pressure intensifying valve V1 configured to increase the pressure in the first channel PH1, and a pressure reducing valve V2 configured to reduce the pressure in the first channel PH1. The internal space of the pressure adjuster 10 can include a first space S3, a second space S4, and a third space S5. The first space S3 and the second space S4 are partitioned by a diaphragm 13. A spring 14 can be connected to the diaphragm 13. Also, a valve body 11 can be coupled with the diaphragm 13, and a spring 12 can be connected to the valve body 11. The position of the valve body 11 is decided by the restoring force of the springs 12 and 14 and the diaphragm 13 and the pressure difference between the first space S3 and the second space S4, and the gap between the valve body 11 and the seat facing this is thus decided.

If the pressure intensifying valve V1 is opened, the carbon dioxide gas is introduced from the third channel PH3 to the first space S3 via the third space S5, and the pressure in the first space S3 increases. Thus, the carbon dioxide gas passing through a valve formed by the valve body 11 and a seal facing this increases, and the pressure of the carbon dioxide gas in the second space S4 increases. The pressure in the first space S3 increases until the restoring force of the springs 12 and 14 and the diaphragm 13 and the pressure difference between the first space S3 and the second space S4 balance, and the pressure in the second space S4, that is, the first channel PH1 also increases.

If the pressure reducing valve V2 is opened, the carbon dioxide gas is discharged to the first space S3, and the pressure in the first space S3 decreases. Thus, the carbon dioxide gas passing through the valve formed by the valve body 11 and the seal facing this decreases, and the pressure of the carbon dioxide gas in the second space S4 decreases. The pressure in the first space S3 decreases until the restoring force of the springs 12 and 14 and the diaphragm 13 and the pressure difference between the first space S3 and the second space S4 balance, and the pressure in the second space S4, that is, the first channel PH1 also decreases.

The controller 30 can be configured to, when reducing the pressure in the first channel PH1 to reduce the pressure in the beverage barrel 1, open the relief valve 20 in accordance with a target pressure, that is, make the first channel PH1 communicate with the atmosphere via the second opening OP2 in a state in which the pressure reducing valve V2 is closed. According to a configuration that discharges the carbon dioxide gas in the beverage barrel 1 via the relief valve 20 when reducing the pressure in the beverage barrel 1, it is possible to prevent the carbon dioxide gas containing a beverage mist (for example, a beer mist) in the beverage barrel 1 from flowing into the pressure adjuster 10. This suppresses sticking of the constituent elements of the pressure adjuster 10 due to the beverage mist.

The carbon dioxide gas supply apparatus 100 can also include a pressure sensor 82 that detects the pressure in the first channel PH1. The controller 30 can control the pressure intensifying valve V1, the pressure reducing valve V2, and the relief valve 20 based on the output of the pressure sensor 82. Note that in an example, the controller 30 controls the three-way valve V4, thereby controlling the relief valve 20. The carbon dioxide gas supply apparatus 100 may further include a pressure sensor 83 that detects the pressure in the third channel PH3. The controller 30 can detect shortage of the carbon dioxide gas in the carbon dioxide gas supply source 3 based on the output of the pressure sensor 83.

Note that the pressure intensifying valve V1, the pressure reducing valve V2, and the three-way valve V4, and the temperature sensor 81, the pressure sensor 82, and the pressure sensor 83 are not connected to the controller 30 in Fig. 1, but these are connected to the controller 30 by wire or wirelessly.

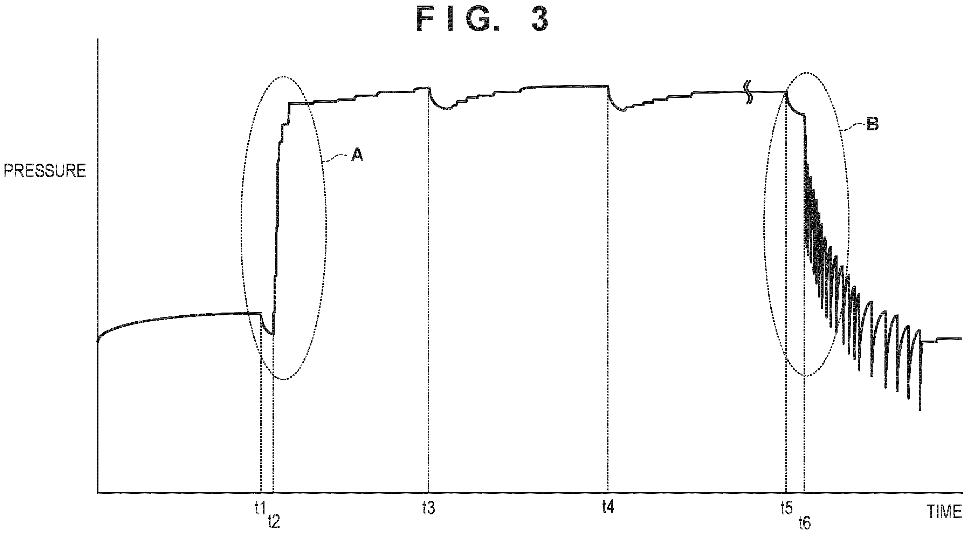

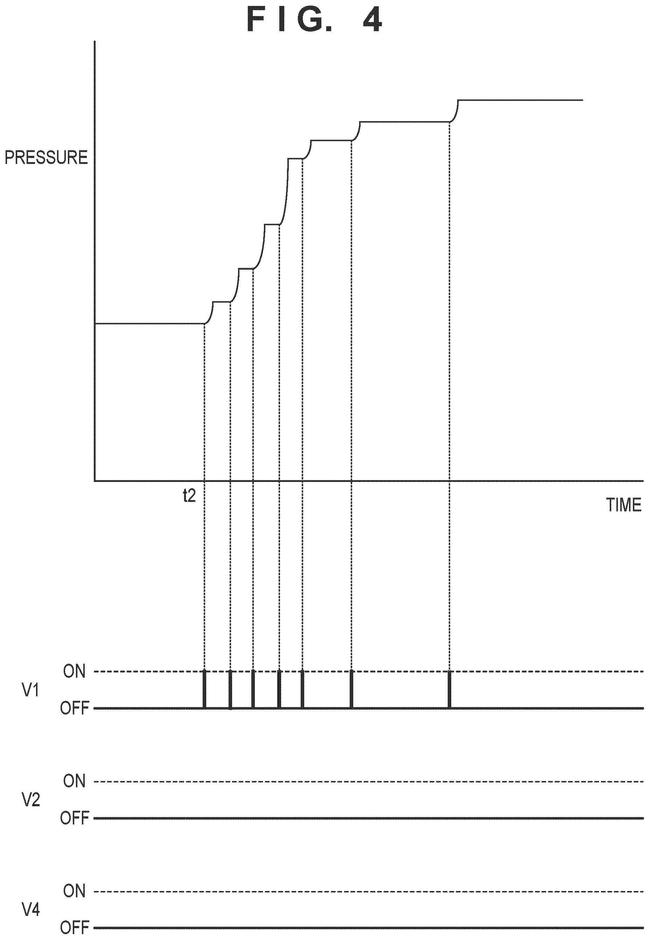

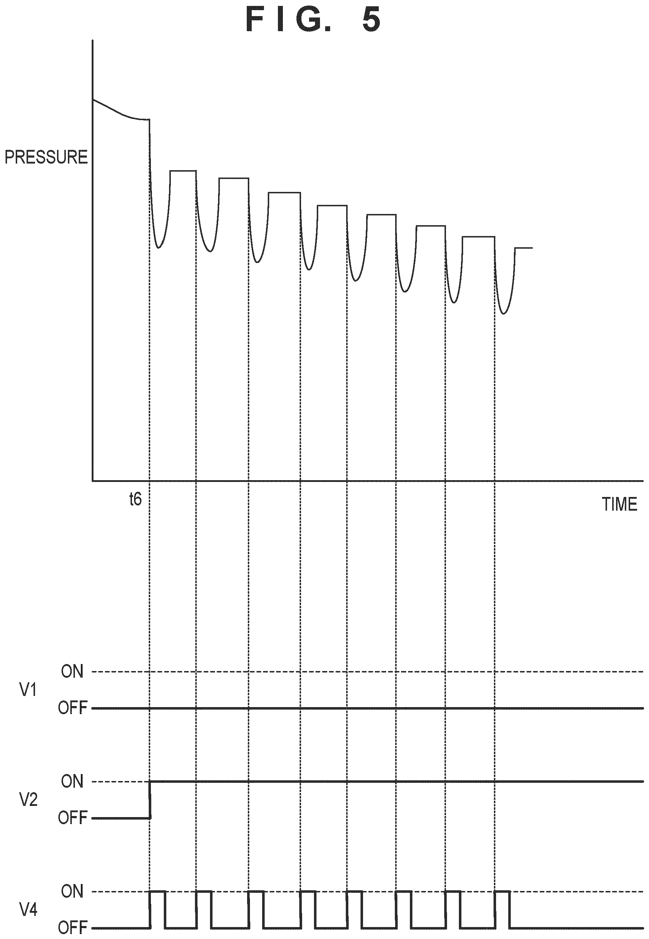

Fig. 3 schematically shows the operation of the carbon dioxide gas supply apparatus 100. Fig. 4 is an enlarged view of a portion A in Fig. 3, and Fig. 5 is an enlarged view of a portion B in Fig. 3. The ordinate represents the pressure detected by the pressure sensor 82. The pressure may be the output value itself of the pressure sensor 82, or may be a value obtained by converting the output value (for example, an analog value or digital value represented by a relative measure) into a value of another measure (typically, a temperature). The abscissa represents time.

The example shown in Fig. 3 starts from a point of time when the beverage barrel 1 is brought from the outside (for example, 35°C) into a room (for example, 25°C), the first channel PH1 is connected to the beverage barrel 1, and the beverage server 2 is also connected. By the pressure of the carbon dioxide gas in the beverage barrel 1, the pressure in the first channel PH1 increases. At time t1, the beverage server 2 is operated to pour the beverage. The pressure in the beverage barrel 1 and the first channel PH1 thus lowers a little. When the beverage is poured, the temperature indicated by the output of the temperature sensor 81 rises.

In response to the rise of the temperature indicated by the output of the temperature sensor 81, the controller 30 changes the target pressure in the beverage barrel 1 (and the first channel PH1) to a pressure according to the temperature. According to the change of the target pressure, the controller 30 controls the pressure intensifying valve V1, the pressure reducing valve V2, and the relief valve 20 (the pressure intensifying valve V1, the pressure reducing valve V2, and the three-way valve V4) based on the target pressure after the change. More specifically, in this example, the controller 30 can control the pressure intensifying valve V1, the pressure reducing valve V2, and the three-way valve V4 such that the temperature indicated by the output of the pressure sensor 82 matches the target pressure. In an example, the controller 30 can intermittently open the pressure intensifying valve V1, as exemplarily shown in Fig. 4.

In the example shown in Fig. 3, at time t3, the beverage server 2 is further operated to pour the sparkling beverage, and at time t4, the beverage server 2 is further operated to pour the sparkling beverage. Also, in the example shown in Fig. 3, after that, the time further elapses, and at time t5 after the temperature of the sparkling beverage in the beverage barrel 1 approaches the room temperature, the beverage server 2 is further operated to pour the beverage. When the sparkling beverage is poured, the temperature indicated by the output of the temperature sensor 81 lowers.

In response to the lowering of the temperature indicated by the output of the temperature sensor 81, the controller 30 changes the target pressure in the beverage barrel 1 (and the first channel PH1) to a pressure according to the temperature. According to the change of the target pressure, the controller 30 controls the pressure intensifying valve V1, the pressure reducing valve V2, and the relief valve 20 (the pressure intensifying valve V1, the pressure reducing valve V2, and the three-way valve V4) based on the target pressure after the change. More specifically, in this example, the controller 30 can control the pressure intensifying valve V1, the pressure reducing valve V2, and the three-way valve V4 such that the temperature indicated by the output of the pressure sensor 82 matches the target pressure. In an example, the controller 30 can intermittently open the three-way valve V4 in a state in which the pressure reducing valve V2 is continuously opened, as exemplarily shown in Fig. 5.

The invention is not limited to the foregoing embodiments, and various variations/changes are possible within the spirit of the invention.

### REFERENCE SIGNS LIST

1: beverage barrel, 2: beverage server, 3: carbon dioxide gas supply source, 10: pressure adjuster, 11: valve body, 12: spring, 13: diaphragm, 14: spring, S3: first space, S4: second space, S5: third space, 20: relief valve, 21: cylinder, 22: piston, 23: valve body, 24: spring, OP1: first opening, OP2: second opening, 29: seat, S1: first space, S2: second space, 30: controller, 40: regulator, 60: check valve, 81: temperature sensor, 82: pressure sensor, 83: pressure sensor, V1: pressure intensifying valve, V2: pressure reducing valve, V4: three-way valve, PH1: first channel, PH2: second channel, PH3: third channel, 100: carbon dioxide gas supply apparatus

## Claims

1. A carbon dioxide gas supply apparatus comprising:
a pressure adjuster including a primary-side port and a secondary-side port and configured to adjust a pressure of a carbon dioxide gas supplied from a carbon dioxide gas supply source to the primary-side port and send the carbon dioxide gas from the secondary-side port;
a relief valve connected to a first channel configured to connect the secondary-side port and a beverage barrel; and
a controller configured to control the pressure adjuster and the relief valve,
wherein the controller controls the relief valve such that a pressure in the first channel is reduced in accordance with an output of a temperature sensor configured to detect a temperature of a beverage sent from the beverage barrel to a beverage server.

2. The carbon dioxide gas supply apparatus according to claim 1, further comprising a second channel configured to supply the carbon dioxide gas supplied from the carbon dioxide gas supply source to the relief valve to supply, to the relief valve, a force for maintaining the relief valve in a closed state.

3. The carbon dioxide gas supply apparatus according to claim 2, further comprising:
a regulator configured to reduce a pressure of the carbon dioxide gas supplied from the carbon dioxide gas supply source to a predetermined pressure; and
a third channel configured to supply, to the pressure adjuster, the carbon dioxide gas whose pressure is reduced to the predetermined pressure by the regulator,
wherein the second channel supplies, to the relief valve, the carbon dioxide gas whose pressure is reduced to the predetermined pressure by the regulator.

4. The carbon dioxide gas supply apparatus according to claim 3, wherein
the relief valve includes:
a cylinder including a first opening provided with a seat, and a second opening communicating with atmosphere;
a piston configured to separate an internal space of the cylinder to a first space and a second space;
a valve body arranged in the second space and supported by the piston to face the seat; and
a spring configured to press the valve body to form a gap between the seat and the valve body,
the carbon dioxide gas supplied to the relief valve via the second channel is introduced into the first space and gives a force in a direction of pressing the valve body against the seat to the piston,
the first opening communicates with the first channel, and
the second opening makes the second space communicate with the atmosphere.

5. The carbon dioxide gas supply apparatus according to claim 4, further comprising a three-way valve arranged in the second channel,
wherein the three-way valve is controlled by the controller to one of a first state in which the second channel and the first space of the relief valve are connected and a second state in which the first space of the relief valve communicates with the atmosphere.

6. The carbon dioxide gas supply apparatus according to claim 5, further comprising a check valve arranged in the second channel to supply the carbon dioxide gas from the regulator to the three-way valve.

7. The carbon dioxide gas supply apparatus according to any one of claims 1 to 6, further comprising a safety valve connected to a position between the pressure adjuster and a connecting portion of the relief valve in the first channel.

8. The carbon dioxide gas supply apparatus according to any one of claims 1 to 7, wherein
the pressure adjuster includes:
a pressure intensifying valve configured to increase the pressure in the first channel; and
a pressure reducing valve configured to reduce the pressure in the first channel.

9. The carbon dioxide gas supply apparatus according to claim 8, wherein when reducing the pressure in the first channel to reduce the pressure in the beverage barrel, the controller opens the relief valve in accordance with a target pressure in a state in which the pressure reducing valve is closed.
